(19) Europäisches Patentamt
European Patent Office
Office européen des brevets

(11) **EP 2 491 239 B1**

(12) **EUROPÄISCHE PATENTSCHRIFT**

(45) Veröffentlichungstag und Bekanntmachung des Hinweises auf die Patenterteilung:
**28.09.2016 Patentblatt 2016/39**

(21) Anmeldenummer: **10770767.1**

(22) Anmeldetag: **12.10.2010**

(51) Int Cl.:
*F16L 11/08* (2006.01)    *F02M 55/00* (2006.01)
*F02M 55/04* (2006.01)    *D04C 1/06* (2006.01)
*F16L 55/033* (2006.01)

(86) Internationale Anmeldenummer:
**PCT/EP2010/065246**

(87) Internationale Veröffentlichungsnummer:
**WO 2011/047986 (28.04.2011 Gazette 2011/17)**

(54) **KRAFTSTOFFEINSPRITZSYSTEM**

FUEL INJECTION SYSTEM

SYSTÈME D'INJECTION DU CARBURANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2009 DE 102009045898**

(43) Veröffentlichungstag der Anmeldung:
**29.08.2012 Patentblatt 2012/35**

(73) Patentinhaber: **Robert Bosch GmbH**
**70442 Stuttgart (DE)**

(72) Erfinder:
• **KNIS, Wolfram**
**73529 Schwaebisch Gmuend (DE)**
• **EHRHARDT, Uwe**
**73760 Ostfildern (DE)**
• **ALBRECHT, Hans**
**71334 Waiblingen (DE)**

(56) Entgegenhaltungen:
EP-A1- 0 267 818    EP-A1- 1 150 003
WO-A1-92/00481    WO-A1-97/27416
WO-A1-2005/061883    DE-A1- 4 321 998
DE-A1- 10 156 732    DE-A1- 10 212 871
DE-B3- 10 334 673    FR-A- 1 187 335
FR-A3- 2 929 344    GB-A- 2 265 959
US-A1- 2001 003 995    US-A1- 2004 139 947
US-A1- 2005 109 323    US-B1- 7 264 021

• BOSCH ED - ISENBURG R: "Elektronische Speichereinspritzung Common Rail", 1 January 1998 (1998-01-01), DIESEL-SPEICHEREINSPRITZSYSTEM COMMON RAIL. AUSGABE 98/99, STUTTGART : ROBERT BOSCH GMBH, DE, PAGE(S) 1 - 49, XP002209528,

**Beschreibung**

Technisches Gebiet

Die Erfindung betrifft ein Kraftstoffeinspritzsystem, insbesondere ein Common-Rail-Einspritzsystem, mit mindestens zwei Injektoren, die jeweils einen Rücklaufanschluss umfassen und an ihren Rücklaufanschlüssen über einen Schlauch miteinander verbunden sind, der einen inneren Hohlraum aufweist, in dem flüssiger Kraftstoff strömen kann und der von einer Wandung umgeben ist. Ferner betrifft die Erfindung einen Schlauch, insbesondere für ein Common-Rail-Einspritzsystem.

Stand der Technik

In Hochdruckbereichen von Kraftstoffeinspritzsystemen, insbesondere bei Common-Rail-Einspritzsystemen, können Druckpulsationen in Kraftstoffleitungen auftreten. Diese Druckpulsationen können beispielsweise durch eine Voreinspritzung verursacht werden. Ferner können eine Elastizität der Leitungen sowie eine Kompressibilität von Kraftstoff zur Entstehung der Pulsation beitragen. Die Pulsation kann sich insbesondere zwischen einzelnen Injektoren, die an Rücklaufanschlüssen über Schläuche miteinander verbunden sind, fortpflanzen. Trifft die Pulsation auf einen Rücklaufanschluss eines Injektors, so ändert sich an diesem Injektor der Druck des Kraftstoffs, was zu einer veränderten Kraftstoffabgabe führen kann. Als Folge weist das Kraftstoffsystem verminderte Laufruhe, erhöhten Kraftstoffverbrauch und verschlechterte Abgaswerte auf.

Um dem Problem der Druckpulsation in Kraftstoffleitungen zu begegnen, ist beispielsweise gemäß EP 1 398 496 A2 eine Hochdruckleitung für Kraftstoffeinspritzsysteme von Brennkraftmaschinen geschaffen, bei der in die Hochdruckleitung mindestens eine Einschnürung eingearbeitet ist. Hierdurch wird eine Querschnittsverengung in der Hochdruckleitung bewirkt. Diese Querschnittsverengung hat zur Folge, dass sich Druckpulsationen nicht oder nur in sehr eingeschränktem Umfang in der Hochdruckleitung ausbreiten.

Ferner ist gemäß der DE 100 49 285 A1 eine Hochdruckleitung für Kraftstoffeinspritzsysteme für Brennkraftmaschinen mit einer Längsrichtung mit einem Außendurchmesser und mit einem Innendurchmesser bekannt, wobei sich mindestens in einem Abschnitt der Hochdruckleitung der Innendurchmesser in Längsrichtung ändert. Durch die Änderung des Innendurchmessers entstehen Absätze, an denen eine Teilreflektion von Druckwellen erfolgt. Durch die Teilreflektion der Druckwellen werden die von den Druckwellen verursachten zeitlichen Druckschwankungen am Injektor verringert oder durch Interferenzeffekte ausgelöscht. Hierdurch erfolgt die Kraftstoffzumessung mit größerer Genauigkeit, so dass sich das Lauf- und Verbrauchsverhalten der mit der Hochdruckleitung ausgestatteten Brennkraftmaschine verbessert.

WO92/00481 A1 offenbart eine weitere Hochdruckleitung mit gekreuzten Fadenlagen.

Offenbarung der Erfindung

Erfindungsgemäß ist gemäß Anspruch 1 ein Kraftstoffeinspritzsystem, insbesondere ein Common-Rail-Einspritzsystem, mit mindestens zwei Injektoren geschaffen, die jeweils einen Rücklaufanschluss umfassen und an ihren Rücklaufanschlüssen über einen Schlauch miteinander verbunden sind, der einen inneren Hohlraum aufweist, in dem flüssiger Kraftstoff strömen kann und der von einer Wandung umgeben ist, wobei die Wandung derart elastisch deformierbar gestaltet ist, dass sie hydraulische Pulsationen des flüssigen Kraftstoffs durch eine Volumenänderung des Hohlraums dämpft.

Es ist ein Kraftstoffeinspritzsystem geschaffen, das an den Rücklaufanschlüssen der Injektoren über einen die Injektoren verbindenden Schlauch verfügt, der geeignet ist, Flüssigkeiten - insbesondere Kraftstoffe, wie etwa Benzin- oder Dieselkraftstoffe - im Wesentlichen pulsationsfrei zu leiten.

Unter einer Pulsation ist vorliegend ein Druckstoß zu verstehen, der durch ein schnelles Öffnen oder Schließen eines Ventils entstehen kann. Die kinetische Energie der sich im Schlauch bewegenden Flüssigkeit bewirkt aufgrund des allgemein niedrigen Kompressionsmoduls von Flüssigkeiten einen sehr schnellen Anstieg des Drucks im Schlauch, was zum Druckstoß führt.

Der Schlauch, der die Injektoren des Kraftstoffeinspritzsystems miteinander verbindet, weist einen inneren Hohlraum auf, der von einer elastischen Wandung umgeben ist.

Diese Wandung des erfindungsgemäßen Schlauchs ist derart ausgebildet, dass sie hydraulische Pulsationen der Flüssigkeiten durch eine elastische Deformation aufnehmen kann. Die radiale Nachgiebigkeit der Wandung ist erfindungsgemäß gezielt auf den im Hohlraum herrschenden Innendruck und die sich dort ergebenen Druckstöße eingestellt. Das heißt, bei einem impulsartigen Anstieg des Innendrucks im Hohlraum des Schlauchs erfolgt eine Anpassung des Volumens des Hohlraums durch eine Dehnung der Wandung. Das Volumen des Hohlraums vergrößert sich in etwa um das Volumen der Flüssigkeit, das die Pulsation auslöst. Ausbreitungen, Überlagerungen bzw. Resonanzen von Pulsationen werden durch die Wandungsdehnung, die an die Druckänderung im Hohlraum des Schlauchs angepasst ist, weitestgehend verhindert.

Gemäß einer ersten vorteilhaften Weiterbildung des erfindungsgemäßen Kraftstoffeinspritzsystems ist die elastische Deformierbarkeit der Wandung des Schlauchs derart gestaltet, dass bei einer Innendruckänderung von ca. 3 bar auf ca. 6 bar der Hohlraum eine Volumenänderung von ca. 45 %-55 % aufweist.

Bei dieser Weiterbildung wird bei einer Pulsation, die eine Innendruckänderung im Hohlraum von ca. 3 bar auf ca. 6 bar auslöst, ein optimales Dämpfungsverhalten des Schlauchs geschaffen. Die Volumenänderung des Hohlraums erfolgt aufgrund einer Deformierung bzw. Verformung der Wandung. Bei der Verformung der Wandung wird so genannte Walkarbeit verrichtet, bei der ein Teil der kinetischen Energie der Pulsation in Wärmeenergie und ein Teil in die Verformung der Wandung umgewandelt wird. Infolge der elastischen Eigenschaften der Wandung nimmt die Wandung nach Beendigung der Pulsation wieder ihre Ausgangsform ein. Je größer die Verformung der Wandung ist und je mehr Walkarbeit verrichtet wird, umso größer ist die Dämpfungseigenschaft des erfindungsgemäßen Schlauchs.

Bei der vorliegenden Weiterbildung findet mit einer Druckänderung von ca. 3 bar auf ca. 6 bar eine relativ geringe Druckerhöhung mit einer relativ geringen Volumenänderung, nämlich von ca. 45 %-55 %, statt. Es wird somit relativ wenig Walkarbeit verrichtet und die Dämpfung des Schlauchs ist in diesem Druckbereich relativ gering.

Gemäß einer zweiten vorteilhaften Weiterbildung des erfindungsgemäßen Kraftstoffeinspritzsystems ist die elastische Deformierbarkeit der Wandung des Schlauchs derart gestaltet, dass bei einer Innendruckänderung von ca. 6 bar auf ca. 10 bar der Hohlraum eine Volumenänderung von ca. 80 %-100 % aufweist.

Bei einem derartig weitergebildeten Schlauch wird bei einer Pulsation, die eine Innendruckänderung von ca. 6 bar auf ca. 10 bar auslöst, ein optimales Dämpfungsverhalten des Schlauchs geschaffen. Bei dieser Weiterbildung des erfindungsgemäßen Schlauchs wird in einem relativ geringen Druckänderungsbereich, nämlich von ca. 6 bar auf ca. 10 bar, relativ viel Walkarbeit mit einer relativ hohen Volumenänderung, nämlich von ca. 80 %-100 %, verrichtet. Somit ist die Dämpfungseigenschaft des erfindungsgemäßen Schlauchs in diesem Druckbereich relativ hoch.

Gemäß einer dritten vorteilhaften Weiterbildung des erfindungsgemäßen Kraftstoffeinspritzsystems ist die elastische Deformierbarkeit der Wandung des Schlauchs derart gestaltet, dass bei einer Innendruckänderung von ca. 10 bar auf ca. 20 bar der Hohlraum eine Volumenänderung von ca. 90 %-100 % aufweist.

Diese vorteilhafte Weiterbildung bewirkt bei einer Pulsation, die eine Innendruckänderung im Hohlraum von ca. 10 bar auf ca. 20 bar auslöst, ein optimales Dämpfungsverhalten des Schlauchs. Vorliegend wird bei einer relativ großen Druckänderung, nämlich von ca. 10 bar auf ca. 20 bar, relativ viel Walkarbeit mit einer Volumenänderung von ca. 90 %-100 % verrichtet. Die Dämpfungseigenschaft des Schlauchs ist in diesem Druckbereich relativ hoch.

Gemäß einer vierten vorteilhaften Weiterbildung des erfindungsgemäßen Kraftstoffeinspritzsystems ist die elastische Deformierbarkeit der Wandung des Schlauchs derart gestaltet, dass bei einer Innendruckänderung von ca. 20 bar auf ca. 40 bar der Hohlraum eine Volumenänderung von ca. 30 %-50 % aufweist. Bei dieser Weiterbildung wird bei einer Pulsation, die eine Innendruckänderung im Hohlraum von ca. 20 bar auf ca. 40 bar auslöst, ein optimales Dämpfungsverhalten des Schlauchs geschaffen. Die Wandung des Schlauchs verrichtet vorliegend bei einer relativ hohen Druckänderung von ca. 20 bar auf ca. 40 bar relativ wenig Walkarbeit, nämlich mit einer Volumenänderung von ca. 30 %-50 %. Die Dämpfungseigenschaft des Schlauchs ist in diesem Druckbereich relativ gering.

Der für den erfindungsgemäßen Schlauch relevante Druckbereich liegt im Wesentlichen zwischen ca. 6 bar bis ca. 10 bar. In diesem Druckbereich weist der Schlauch eine besonders hohe Dämpfung auf.

Ferner ist erfindungsgemäß ein Schlauch zum Dämpfen einer Pulsation von Flüssigkeiten, insbesondere für ein Kraftstoffeinspritzsystems, dort besonders ein Common-Rail-Einspritzsystem, geschaffen, wobei der Schlauch eine gewickelte Fadeneinlage mit einem Steigungswinkel von 15°-40°, insbesondere von 25°-30°, aufweist, wobei die Fadeneinlage 4-12 Fäden in einer Wickelrichtung umfasst und die Fäden aus aromatischen Polyamiden gebildet sind.

Der erfindungsgemäße Schlauch umfasst einen Hohlraum, der von einer elastischen Wandung mit einer Fadeneinlage umgeben ist. Der Schlauch ist derart angepasst, dass er Flüssigkeiten in seinem Hohlraum leiten kann und auftretende Pulsationen der Flüssigkeiten dämpft.

Unter Flüssigkeiten sind vorliegend Kraftstoffe, wie etwa Benzin- oder Dieselkraftstoffe, zu verstehen.

Unter einer Pulsation ist vorliegend ein Druckstoß zu verstehen, der durch ein schnelles Öffnen oder Schließen eines Ventils entstehen kann. Die kinetische Energie der sich im Schlauch bewegenden Flüssigkeit bewirkt aufgrund des allgemeinen niedrigen Kompressionsmoduls von Flüssigkeiten einen sehr schnellen Anstieg des Drucks im Schlauch, was zum Druckstoß führt.

Um die auftretenden Pulsationen der Flüssigkeit zu dämpfen, weist die Wandung mit der Fadeneinlage eine Dehnungseigenschaft auf, die eine Wandungsdehnung des Hohlraums bewerkstelligt, die dem bei der Pulsation vorliegenden Innendruck angepasst ist. Die Pulsation der Flüssigkeit wird durch eine elastische Deformation der Wandung des Schlauchs aufgenommen. Das heißt, es wird vorliegend eine spezielle radiale Nachgiebigkeit der Fadeneinlage bezogen auf den anliegenden Innendruck eingestellt. Die dynamischen Eigenschaften der Fadeneinlage bestimmen die Dämpfungseigenschaften des erfindungsgemäßen Schlauchs.

Die Fadeneinlage umfasst eine Anzahl an Fäden, die in einer Längsrichtung des Schlauchs in Windungen verlaufen bzw. gewickelt ausgebildet sind. Die Fäden bilden mit einer Achse in Längsrichtung des Schlauchs einen Steigungswinkel von 15°-40°, insbesondere von 25°-30°. Die Größe des Steigungswinkels hat Einfluss auf die Steifigkeit des Schlauchs. Je flacher der Steigungswinkel ist, umso länger ist der Faden, der benötigt wird, um den Schlauch in Längsrichtung zu umlaufen und umso geringer ist die resultierende Steifigkeit der Fadeneinlage. Bei einem Steigungswinkel von ca. 54° wird eine maximale Steifigkeit einer Fadeneinlage erzielt; bei einem Steigungswinkel von über ca. 54° nimmt die Steifigkeit wieder ab. Bei einem Steigungswinkel von 15°-40°, insbesondere von 25°-30°, wird eine Dehnungseigenschaft zur Verfügung gestellt, die dem Innendruck bei Pulsation derart angepasst ist, dass eine gute Dämpfungseigenschaft des erfindungsgemäßen Schlauchs bewerkstelligt wird.

Infolge der Wandungsdehnung vergrößert sich der eingestellte Steigungswinkel der Fäden. Mit der Vergrößerung des Steigungswinkels wird eine Rückstellkraft induziert. Die Größe dieser Rückstellkraft ist ein Maß für die Dämpfungseigenschaft des erfindungsgemäßen Schlauchs.

Erfindungsgemäß umfasst die Fadeneinlage 4 bis 12 Fäden in einer Wickelrichtung.

Die Anzahl der Fäden bestimmt im Wesentlichen die Rückstellkraft der Fadeneinlage. Die Fäden können in Längsrichtung des Schlauchs in eine Richtung, also rechts- oder linksherum, oder in zwei Richtungen, also rechts- und linksherum gewickelt sein. Umfasst die Fadeneinlage 4 bis 12 Fäden in einer Wickelrichtung, so wird eine Elastizität bzw. Rückstellkraft zur Verfügung gestellt, die dem Innendruck bei Pulsation der Flüssigkeit optimal angepasst ist, um eine möglichst gute Dämpfungseigenschaft des Schlauchs zu erhalten.

Erfindungsgemäß sind die Fäden aus aromatischen Polyamiden gebildet. Aromatische Polyamide, so genannte Aramide, weisen hohe Festigkeitseigenschaften auf, insbesondere eine hohe Bruchdehnung, gute Schwingungsdämpfungseigenschaften sowie eine gute Beständigkeit gegenüber Säuren und Laugen. Des Weiteren sind Aramide hitze- und feuerbeständig bis ca. 370° C. Somit eignen sich Fäden aus Aramid besonders gut für den Einsatz in Kraftstoffeinspritzsystemen, wo hohe Temperaturen vorliegen und eine Dämpfung von hydraulischer Pulsation zu bewerkstelligen ist.

Gemäß einer ersten vorteilhaften Weiterbildung des erfindungsgemäßen Schlauchs weisen die Fäden eine längsbezogene Masse von 1.100 dtex auf.

Gemäß einer zweiten vorteilhaften Weiterbildung des erfindungsgemäßen Schlauchs sind die Fäden in einer spiralisierten Fadenführung gestaltet.

Mit dieser Weiterbildung wird ein Schlauch zur Verfügung gestellt, der lediglich eine Wickelrichtung der Fäden, nämlich in eine rechte oder in eine linke Richtung, aufweist. Eine spiralisierte Fadenführung ist im Herstellungsprozess besonders einfach zu realisieren. Ferner weist diese Fadenführung keine Kreuzungsstellen der einzelnen Fäden auf. Kreuzungsstellen bilden in der Wandung des Schlauchs lokale Versteifungspunkte, die die Dämpfungseigenschaft des Schlauchs beeinträchtigen können.

Gemäß einer dritten vorteilhaften Weiterbildung des erfindungsgemäßen Schlauchs sind die Fäden in einer geflochtenen Fadenführung gestaltet.

Eine derartige alternative Ausgestaltung der Fadeneinlage weist eine Fadenführung auf, die zwei Wickelrichtungen, nämlich eine rechte und eine linke Wickelrichtung, umfasst. Die einzelnen Fäden überkreuzen sich und bilden Kreuzungsstellen, die lokale Versteifungspunkte zur Verfügung stellen. Hierdurch kann bei einer etwaigen mangelnden Steifigkeit der Fadeneinlage - beispielsweise durch Verwendung weniger Fäden oder bei Wahl eines geringen Steigungswinkels - diese mangelnde Steifigkeit ausgeglichen werden.

Kurzbeschreibung der Zeichnungen

Nachfolgend werden Ausführungsbeispiele der erfindungsgemäßen Lösung anhand der beigefügten schematischen Zeichnungen näher erläutert. Es zeigen:

Fig. 1   eine aufgebrochene perspektivische Darstellung eines Ausführungsbeispiels eines erfindungsgemäßen Schlauchs,

Fig. 2   einen vergrößerten Ausschnitt der Fadeneinlage in Fig. 1,

Fig. 3   einen weiteren vergrößerten Ausschnitt der Fadeneinlage in Fig. 1,

Fig. 4   einen vergrößerten Ausschnitt der Fadeneinlage in Fig. 1 sowie einen Querschnitt durch ein Fadenpaket,

Fig. 5   eine schematische Darstellung einer Anordnung von Fadenspulen bei der Herstellung eines erfindungsgemäßen Schlauchs,

Fig. 6   ein Diagramm, das die Volumenzunahme unter Änderung des Innendrucks veranschaulicht, und

Fig. 7   eine schematische Darstellung eines Common-Rail-Einspritzsystems.

Beschreibung von Ausführungsformen

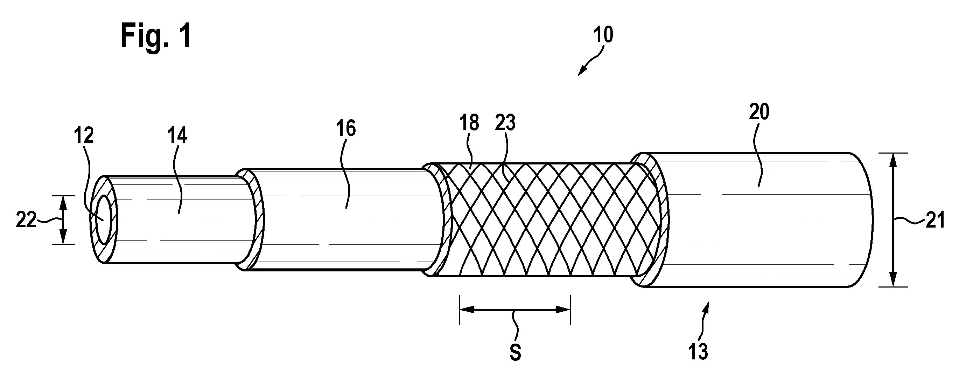

Fig. 1 zeigt ein Ausführungsbeispiel eines erfindungsgemäßen Schlauchs 10. Der Schlauch 10 umfasst in seinem Inneren einen Hohlraum 12, der von einer Wandung 13 umgeben ist. Die Wandung setzt sich vorliegend aus einer Innenschicht 14, einer Zwischenschicht 16, einer Fadeneinlage 18 und einer Außenschicht 20 zusammen. Der Schlauch 10 weist einen Außendurchmesse 21 und im Hohlraum 12 einen Innendurchmesser 22 auf.

Der Hohlraum 12 dient der Aufnahme und Leitung von Flüssigkeiten, wie etwa von Kraftstoffen, insbesondere von Benzin- und Dieselkraftstoffen. An diesen Hohlraum 12 grenzt die Innenschicht 14. Diese Innenschicht 14 ist aus einem elastomeren Werkstoff, wie etwa Kautschuk, insbesondere Fluorkautschuk, gebildet. Fluorkautschuk weist neben guten elastischen Eigenschaften, eine hohe Temperaturbeständigkeit sowie eine gute Beständigkeit gegen Mineralöle, synthetische Hydraulikflüssigkeiten, Kraftstoffe und organische Lösungsmittel auf. Die Shore-Härte A der Innenschicht 14 beträgt 60-80 Shore A, vorzugsweise 65-75 Shore A.

Auf der Innenschicht 14 ist die Zwischenschicht 16 angeordnet, die aus Epichlorohydrin-Gummi gebildet ist. Epichlorohydrin-Gummi zeichnet sich durch gute elastische Eigenschaften und Beständigkeit gegenüber Kraftstoffen, wie Benzinund Dieselkraftstoffen, aus. Ferner ist Epichlorohydrin-Gummi resistent gegen Hitze und Kälte und weist eine gute Stoßabsorptionseigenschaft auf. Die Shore-Härte A der Zwischenschicht 16 beträgt 60-80 Shore A, vorzugsweise 65-75 Shore A.

Auf der Zwischenschicht 16 ist die Fadeneinlage 18 gebildet, die einer Verstärkung des Schlauchs 10 dient. Die Fadeneinlage 18 umfasst eine bestimmte Anzahl an Fäden 23, die in Längsrichtung des Schlauchs 10 gewickelt sind und dabei Windungen umlaufen. Die Innenschicht 14 und die Zwischenschicht 16 werden durch die Fadeneinlage 18 ummantelt, positioniert und stabilisiert.

Die Fadeneinlage 18 ist zum Schutz vor Beschädigungen von der Außenschicht 20 umhüllt. Die Außenschicht besteht vorliegend aus einem robusten elastomeren Werkstoff.

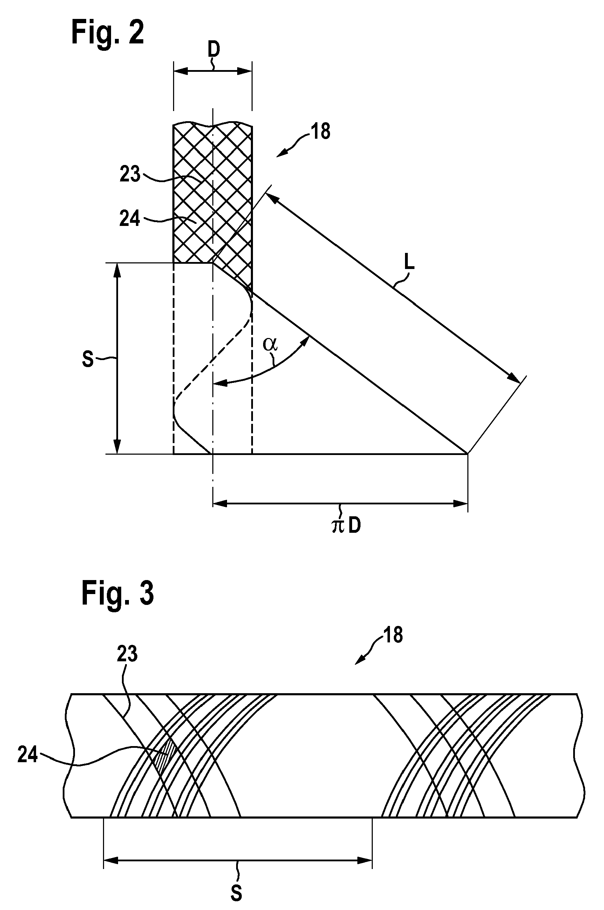

Fig. 2 zeigt geometrische Zusammenhänge der Fadeneinlage 18. Die Fadeneinlage 18 weist einen Durchmesser D auf und ist von Fäden 23 gestaltet, die mit einem Steigungswinkel $\alpha$ von 15°-40°, insbesondere von 25°-30°, wendelförmig zwischen der Zwischenschicht 16 und der Außenschicht 20 verlaufen. Vorliegend weist die Fadeneinlage 18 zwei Wickelrichtungen auf, nämlich eine rechte und eine linke Richtung, so dass die einander kreuzenden Fäden 23 ein Gewebe mit Maschen 24 bilden. Die Fäden 23 weisen somit eine geflochtene Fadenführung auf. Die Größe der Maschen 24 ist durch die Anzahl der in der Fadeneinlage 18 vorhandenen Fäden 23 bestimmt und definiert die Steifigkeit bzw. Dämpfungseigenschaften des Schlauchs 10.

Ein Abschnitt in Längsrichtung des Schlauchs 10, auf dem ein Faden 23 genau eine Windung umläuft, wird vorliegend als Steigung S bezeichnet. Ein Längenabschnitt eines Fadens 23, der benötigt wird, um eine Windung zu umlaufen, ist mit L gekennzeichnet. Somit ergibt sich gemäß Fig. 2 folgender mathematische Zusammenhang zwischen dem Steigungswinkel $\alpha$, dem Durchmesser D, der Steigung S und dem Längenabschnitt des Fadens L:

$$\tan \alpha = \pi * D / S \quad bzw. \quad \sin \alpha = \pi * D / L \quad bzw. \quad \cos \alpha = S / L.$$

In dem Ausführungsbeispiel weist der Schlauch 10 einen Außendurchmesser 21 von ca. 8,6 mm und einen Innendurchmesser 22 von ca. 2,8 mm-4 mm, insbesondere von 3 mm-3,7 mm, auf. Die Fadeneinlage 18 umfasst 4-12 Fäden 23 mit einer spiralisierten Fadenführung und einer Steigung S von 14 mm-28 mm, vorzugsweise von 22 mm. Die einzelnen Fäden 23 sind aus aromatischen Polyamiden gebildet. Es ist gezielt eine Dämpfungseigenschaft des Schlauchs 10 eingestellt, mit der der Schlauch 10 weitestgehend Pulsationen in Kraftstoffleitungen aufnehmen kann. Eine Ausbreitung und Überlagerung von hydraulischen Pulsationen ist minimiert.

Gemäß Fig. 3 umfasst die Fadeneinlage 18 insgesamt 12 Fäden 23, von denen 9 Fäden 23 in die eine Richtung und 3 Fäden 23 in die andere Richtung laufen und ein Geflecht mit Maschen 24 bilden.

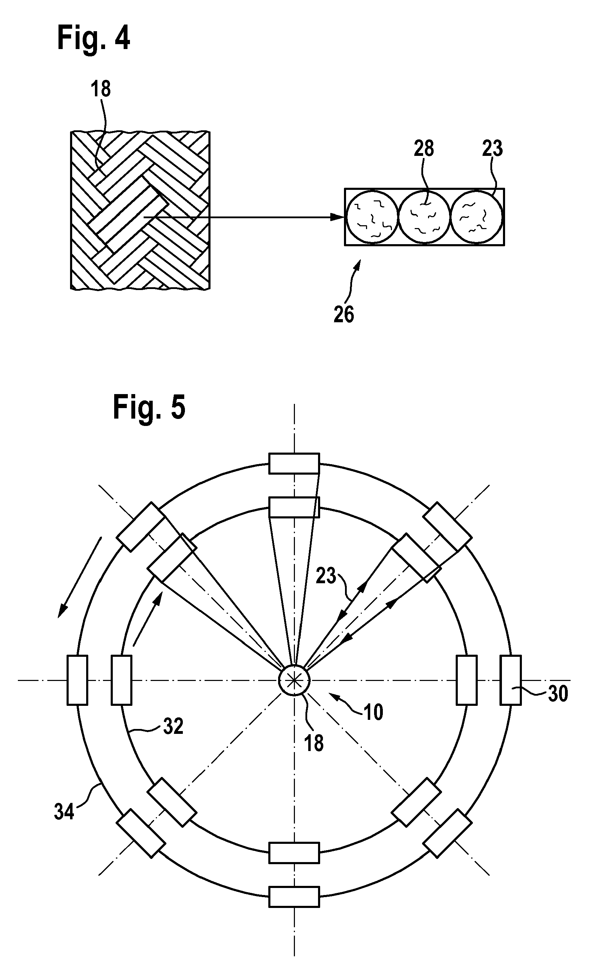

Fig. 4 zeigt die Fadeneinlage 18 mit einer geflochtenen Fadenführung. Bei dieser geflochtenen Fadenführung sind die einzelnen Fäden 23 derart zusammengefasst, dass jeweils drei einzelne Fäden 23 in eine Richtung nebeneinander liegend angeordnet sind und ein Fadenpaket 26 bilden. Die einzelnen Fadenpakete 26 sind miteinander verflochten. Jeder einzelne Faden 23 ist aus Fasern 28 gebildet, die aus aromatischen Polyamiden bestehen. Die einzelnen Fäden weisen eine Fadenstärke, also eine längenbezogene Masse, von vorzugsweise 1.100 dtex auf, was 1.100 g/10.000 m entspricht.

In Fig. 5 ist der Schlauch 10 mit um den Schlauch 10 herum angeordneten Fadenspulen 30 dargestellt. Auf den Fadenspulen 30 sind Fäden 23 oder Fadenpakete 26 gewickelt. Vorliegend sind in einer ersten Reihe 32 acht Fadenspulen 30 und in einer zweiten Reihe 34 ebenfalls acht Fadenspulen 30 mit in etwa gleichmäßigen Abständen zueinander angeordnet. Die acht Fadenspulen 30 in der ersten Reihe 32 drehen sich in eine Richtung um den Schlauch 10 herum und die anderen acht Fadenspulen 30 in der zweiten Reihe 34 drehen sich in die entgegengesetzte Richtung. Jeder einzelne Faden 23 bzw. jedes einzelne Fadenpaket 26 ist mit einer bestimmten Fadenspannung am Schlauch 10 befestigt. Die erste und die zweite Reihe 32, 34 mit den jeweiligen Fadenspulen 30 drehen sich gegenläufig um den Schlauch 10 und flechten auf diese Art und Weise eine Fadeneinlage 18, beispielsweise auf die Zwischenschicht 16.

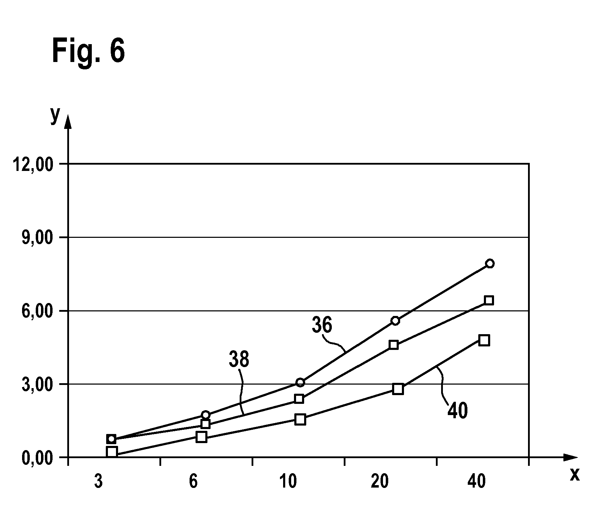

Fig. 6 zeigt ein Diagramm mit zwei Achsen, wobei auf der x-Achse ein Druck in bar und auf der y-Achse ein Volumen des Schlauchs 10 in $cm^3$/m aufgetragen ist. Das Diagramm gibt für drei verschiedene Schläuche 10 mit einheitlichen Innendurchmessern 14 von 3,2 mm aber unterschiedlichen Steigungen S die zugehörige Volumenänderung bei einer Druckänderung wieder. Die Volumenänderung bezogen auf die Druckänderung für einen Schlauch 10 mit einer Steigung S von 22 mm ist in einer Kurve 36, für einen Schlauch 10 mit einer Steigung S von 20 mm in einer Kurve 38 und für einen Schlauch 10 mit einer Steigung S von 18 mm in einer Kurve 40 wiedergegeben.

Die Kurve 36 zeigt, dass sich bei einer Druckänderung von ca. 3 bar auf ca. 6 bar eine Volumenänderung von ca. 1 $cm^3$/m auf ca. 1,5 $cm^3$/m einstellt, was einer Volumenänderung von 50 % entspricht. Bei einer Druckänderung von ca. 6 bar auf ca. 10 bar ergibt sich eine Volumenänderung von ca. 1,5 $cm^3$/m auf ca. 3 $cm^3$/m, was einer Volumenänderung von 100 % entspricht. Bei einer Druckänderung von ca. 10 bar auf ca. 20 bar ergibt sich eine Volumenänderung von ca. 3 $cm^3$/m auf ca. 6 $cm^3$/m, was einer Volumenänderung von 100 % entspricht. Bei einer Druckänderung von ca. 20 bar auf ca. 40 bar ergibt sich eine Volumenänderung von ca. 6 $cm^3$/m auf ca. 8 $cm^3$/m, was einer Volumenänderung von 33 % entspricht.

Die Kurve 38 zeigt, dass sich bei einer Druckänderung von ca. 3 bar auf ca. 6 bar eine Volumenänderung von ca. 0,8 $cm^3$/m auf ca. 1,2 $cm^3$/m einstellt, was einer Volumenänderung von 50 % entspricht. Bei einer Druckänderung von ca. 6 bar auf ca. 10 bar ergibt sich eine Volumenänderung von ca. 1,2 $cm^3$/m auf ca. 2,4 $cm^3$/m, was einer Volumenänderung von 100 % entspricht. Bei einer Druckänderung von ca. 10 bar auf ca. 20 bar ergibt sich eine Volumenänderung von ca. 2,4 $cm^3$/m auf ca. 4,8 $cm^3$/m, was einer Volumenänderung von 100 % entspricht. Bei einer Druckänderung von ca. 20 bar auf ca. 40 bar ergibt sich eine Volumenänderung von ca. 4,8 $cm^3$/m auf ca. 6,5 $cm^3$/m, was einer Volumenänderung von 35 % entspricht.

Die Kurve 40 zeigt, dass sich bei einer Druckänderung von ca. 3 bar auf ca. 6 bar eine Volumenänderung von ca. 0,6 $cm^3$/m auf ca. 0,9 $cm^3$/m einstellt, was einer Volumenänderung von 50 % entspricht. Bei einer Druckänderung von ca. 6 bar auf ca. 10 bar ergibt sich eine Volumenänderung von ca. 0,9 $cm^3$/m auf ca. 1,7 $cm^3$/m, was einer Volumenänderung von 88 % entspricht. Bei einer Druckänderung von ca. 10 bar auf ca. 20 bar ergibt sich eine Volumenänderung von ca. 1,7 $cm^3$/m auf ca. 3 $cm^3$/m, was einer Volumenänderung von 76 % entspricht. Bei einer Druckänderung von ca. 20 bar auf ca. 40 bar ergibt sich eine Volumenänderung von ca. 3 $cm^3$/m auf ca. 4,5 $cm^3$/m, was einer Volumenänderung von 50 % entspricht.

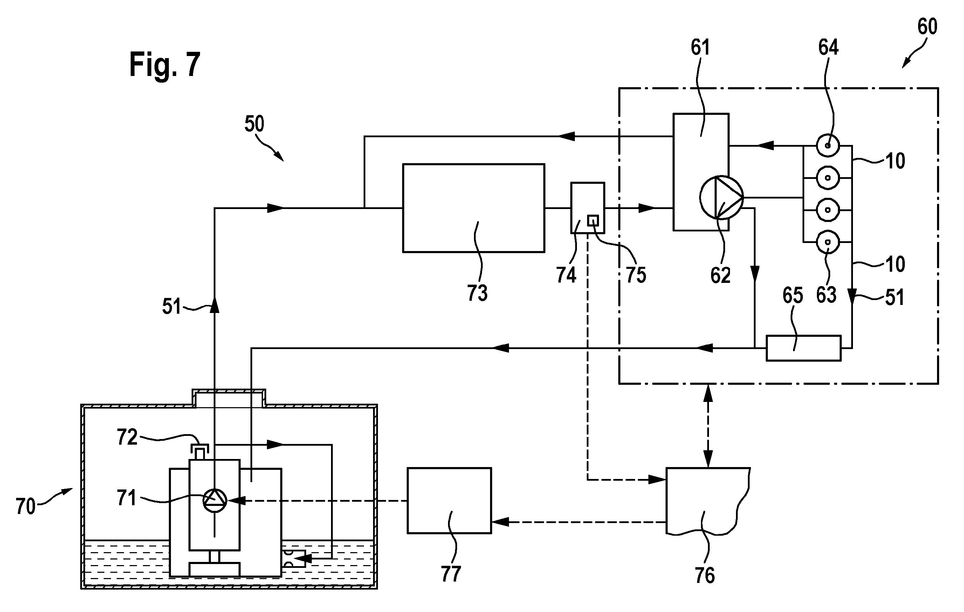

Fig. 7 zeigt ein Kraftstoffeinspritzsystems, nämlich ein Common-Rail-Einspritzsystem 50. Die Strömungsrichtung des Kraftstoffs innerhalb des Common-Rail-Einspritzsystems 50 ist mit Pfeilen 51 gekennzeichnet. Das Common-Rail-Einspritzsystem 50 umfasst eine Motoreinheit 60 mit einem Druckregelventil 61, einer Motorpumpe 62, Zylindern 63 mit Injektoren 64 und einem Rückschlagventil 65. Die Motoreinheit 60 wird mit Kraftstoff aus einem Tank 70 versorgt. Der Tank 70 umfasst eine elektronische Kraftstoffpumpe 71 und ein Druckbegrenzungsventil 72. Zwischen dem Tank 70 und der Motoreinheit 60 ist ein druckfester Filter 73 und ein Kraftstoffkühler 74 angeordnet.

Die elektronische Kraftstoffpumpe 71 fördert unter Hochdruck stehenden und über das Druckbegrenzungsventil 72 druckregulierten Kraftstoff über den druckfesten Filter 73 und den Kraftstoffkühler 74 in die Motoreinheit 60. Der Kraftstoff wirkt gleichzeitig als Kühlmedium der elektronischen Kraftstoffpumpe 71 und nimmt Wärmeenergie der Motorpumpe 62 auf.

Wenn der Kraftstoff den druckfesten Filter 73 durchströmt, wird er weitestgehend von Verunreinigungen gereinigt. Nach der Reinigung durchläuft der Kraftstoff den Kraftstoffkühler 74, der dem Kraftstoff Wärme entzieht, die er beim Durchlaufen der elektronischen Kraftstoffpumpe 71 aufgenommen hat. Ein im Kraftstoffkühler 74 angeordneter Temperatursensor 75 ermittelt kontinuierlich Daten über den Temperaturverlauf des Kraftstoffs und sendet diese Daten an ein Motorsteuergerät 76. Das Motorsteuergerät 76 ermittelt anhand der empfangenen Daten, ob ein festgelegter Temperaturwert überschritten wird. Wird der Temperaturwert überschritten, so steuert das Motorsteuergerät 76 ein weiteres Steuergerät 77 an, das die elektronische Kraftstoffpumpe 71 veranlasst, eine größere Menge an Kraftstoff als Kühlmedium durch den Kraftstoffkühler 74 zu pumpen. Das Motorsteuergerat 76 reguliert somit die Temperatur des Kraftstoffs und schützt das Kraftstoffsystem 50 vor Überhitzung.

Nachdem der Kraftstoff den Kraftstoffkühler 76 durchlaufen hat, wird der Kraftstoff in die Motoreinheit 60 geleitet. In der Motoreinheit 60 wird der Kraftstoff zunächst mittels des Druckregelventils 61 auf einen vorbestimmten konstanten Druck eingestellt; Druckschwankungen werden hierbei weitestgehend ausgeglichen. Die Motorpumpe 62 fördert den Kraftstoff zu den Zylindern 63 zur Verbrennung.

Den Zylindern 63 sind die Injektoren 64 zugeordnet, die an Rücklaufanschlüssen über den erfindungsgemäßen Schlauch 10 miteinander verbunden sind. Der Schlauch 10 ist, wie oben erläutert, derart angepasst, dass er Pulsationen vom Kraftstoff durch eine Wandungsdehnung dämpft. Hierdurch wird eine Ausbreitung und Überlagerung von hydraulischen Pulsationen in dem Schlauch 10 weitestgehend verhindert. Insbesondere kann mittels des erfindungsgemäßen Schlauchs im Wesentlichen verhindert werden, dass sich hydraulische Pulsationen in den Rückläufen zwischen den einzelnen Injektoren fortpflanzen und die Funktionsfähigkeit dieser Injektoren durch eine Druckänderung beeinflussen.

Überschüssiger und nicht verbrannter Kraftstoff, so genanntes Lecköl, das nicht den Zylindern 63 zugeführt wird und lediglich der Kühlung und Schmierung der Motorpumpe 62 dient, wird über das Rückschlagventil 65 unter Niederdruck in den Tank 70 zurückgeleitet.

**Patentansprüche**

1. Kraftstoffeinspritzsystem (50), insbesondere Common-Rail-Einspritzsystem, mit mindestens zwei Injektoren (64), die jeweils einen Rücklaufanschluss umfassen und an den Rücklaufanschlüssen über einen Schlauch (10) miteinander verbunden sind, der einen inneren Hohlraum (12) aufweist, in dem flüssiger Kraftstoff strömen kann und der von einer Wandung (13) umgeben ist,
**dadurch gekennzeichnet, dass** die Wandung (13) derart elastisch deformierbar gestaltet ist, dass sie hydraulische Pulsationen des flüssigen Kraftstoffs durch eine Volumenänderung des Hohlraums (12) dämpft und dass der Schlauch (10) eine gewickelte Fadeneinlage (18) mit einem Steigungswinkel ($\alpha$) von 15°-40°, insbesondere von 25°-30°, aufweist, wobei die Fadeneinlage (18) 4-12 Fäden (23) in einer Wickelrichtung umfasst und die Fäden (23) aus aromatischen Polyamiden gebildet sind.

2. Kraftstoffeinspritzsystem (50) nach Anspruch 1,
**dadurch gekennzeichnet, dass** die Fäden (23) eine längenbezogene Masse von 1.100 dtex aufweisen.

3. Kraftstoffeinspritzsystem (50) nach einem der Ansprüche 1 oder 2,
**dadurch gekennzeichnet, dass** die Fäden (23) in einer spiralisierten Fadenführung gestaltet sind.

4. Kraftstoffeinspritzsystem (50) nach einem der Ansprüche 1 oder 2,
**dadurch gekennzeichnet, dass** die Fäden (23) in einer geflochtenen Fadenführung gestaltet sind.

**Claims**

1. Fuel injection system (50), in particular common rail injection system, having at least two injectors (64) which comprise in each case one return connector and are connected to one another at the return connectors via a hose (10) which has an inner cavity (12), in which liquid fuel can flow and which is surrounded by a wall (13), **characterized in that** the wall (13) is designed so as to be elastically deformable in such a way that it damps hydraulic pulses of the liquid fuel by way of a volume change of the cavity (12), and **in that** the hose (10) has a wound thread insert (18) with a pitch angle ($\alpha$) of from 15°-40°, in particular of from 25°-30°, the thread insert (18) comprising 4-12 threads (23) in a winding direction, and the threads (23) being formed from aromatic polyamides.

2. Fuel injection system (50) according to Claim 1, **characterized in that** the threads (23) have a mass per unit length of 1100 dtex.

3. Fuel injection system (50) according to either of Claims 1 and 2, **characterized in that** the threads (23) are configured in a spiral thread pattern.

4. Fuel injection system (50) according to either of Claims 1 and 2, **characterized in that** the threads (23) are configured in a braided thread pattern.

**Revendications**

1. Système d'injection de carburant (50), en particulier système d'injection à rampe commune, comprenant au moins deux injecteurs (64) qui comprennent chacun un raccord de retour et qui sont connectés l'un à l'autre par le biais d'un tuyau flexible (10) au niveau des raccords de retour, lequel tuyau flexible présente une cavité interne (12) dans laquelle peut s'écouler du carburant liquide et est entouré par une paroi (13),
**caractérisé en ce que** la paroi (13) est configurée de manière à pouvoir être déformée élastiquement de manière à amortir les pulsations hydrauliques du carburant liquide par variation de volume de la cavité (12) et **en ce que** le tuyau flexible (10) présente un insert en fil enroulé (18) avec un angle de pas ($\alpha$) de 15°-40°, en particulier de 25°-30°, l'insert en fil (18) comprenant 4-12 fils (23) dans une direction d'enroulement et les fils (23) étant formés de polyamides aromatiques.

**2.** Système d'injection de carburant (50) selon la revendication 1,
**caractérisé en ce que** les fils (23) présentent une masse rapportée à la longueur de 1.100 dtex.

**3.** Système d'injection de carburant (50) selon l'une quelconque des revendications 1 ou 2,
**caractérisé en ce que** les fils (23) sont formés en un guide-fil spiralé.

**4.** Système d'injection de carburant (50) selon l'une quelconque des revendications 1 ou 2,
**caractérisé en ce que** les fils (23) sont formés en un guide-fil tressé.

## Fig. 1

**Fig. 2**

D

23

24

18

L

S

α

πD

**Fig. 3**

18

23

24

S

# Fig. 4

# Fig. 5

# Fig. 6

Fig. 7

EP 2 491 239 B1

**IN DER BESCHREIBUNG AUFGEFÜHRTE DOKUMENTE**

**In der Beschreibung aufgeführte Patentdokumente**

- EP 1398496 A2
- DE 10049285 A1

- WO 9200481 A1